# EUROPEAN PATENT SPECIFICATION

(11) **EP 2 977 139 B1**
(45) Date of publication and mention of the grant of the patent: **07.11.2018**
(21) Application number: 14770499.3
(22) Date of filing: 13.03.2014
(51) Int. Cl.: B23K 35/28, B23K 9/23, C22C 21/00, C22C 21/02, B23K 9/16, B23K 9/025, B23K 35/02, C22C 21/08, C22C 21/10, C22C 21/16, C22C 38/00, C22C 38/02, C22C 38/04, C22C 38/58, B23K 103/20, B23K 26/323, B23K 26/242, B23K 26/21

(54) **WELDING FILLER MATERIAL FOR BONDING DIFFERENT KIND MATERIALS, AND METHOD FOR PRODUCING DIFFERENT KIND MATERIAL WELDED STRUCTURE**
SCHWEISSFÜLLMATERIAL ZUM VERBINDEN VON MATERIALIEN UNTERSCHIEDLICHER ART SOWIE VERFAHREN ZUR HERSTELLUNG EINER GESCHWEISSTEN STRUKTUR AUS MATERIALIEN UNTERSCHIEDLICHER ART
MATÉRIAU D'APPORT POUR SOUDURE POUR SOUDER DIFFÉRENTS TYPES DE MATÉRIAUX, ET PROCÉDÉ POUR PRODUIRE UNE STRUCTURE SOUDÉE EN MATÉRIAUX DE TYPES DIFFÉRENTS

(30) Priority: 19.03.2013 JP 2013056648
(43) Date of publication of application: 27.01.2016
(73) Proprietor: Kabushiki Kaisha Kobe Seiko Sho (Kobe Steel, Ltd.), Kobe-shi, Hyogo 651-8585 (JP)
(72) Inventor: MATSUMOTO, Tsuyoshi, Kanagawa 251-8551 (JP); KAITOKU, Kazumasa, Kanagawa 251-8551 (JP)
(74) Representative: Müller-Boré & Partner Patentanwälte PartG mbB
(86) International application number: PCT/JP2014/056653
(87) International publication number: WO 2014/148348

(56) References cited:
- JP-A- S63 123 595
- JP-A- S63 123 595
- JP-A- 2008 068 290
- JP-A- 2011 045 926
- JP-A- 2012 071 341
- JP-A- 2013 163 196
- JP-U- 3 135 456
- Tsuyoshi Matsumoto ET AL: "Dissimilar Metal Joining Technology Using Newly Developed Aluminum Flux-Cored Wire (FCW) to Join Aluminum Alloy and Steel", KOBELCO TECHNOLOGY REVIEW NO. 31, 1 January 2013 (2013-01-01), pages 90-95, XP055312505, Retrieved from the Internet: URL:http://www.kobelco.co.jp/english/ktr/p df/ktr_31/090-095.pdf [retrieved on 2016-10-20]
- N. RAMANAIAH ET AL: "Effect of modified AA4043 filler on corrosion behavior of AA6061 alloy GTA welds", INTERNATIONAL JOURNAL OF ADVANCED MANUFACTURING TECHNOLOGY., vol. 64, no. 9-12, 5 May 2012 (2012-05-05) , pages 1545-1554, XP055312509, LONDON; GB ISSN: 0268-3768, DOI: 10.1007/s00170-012-4121-4
- HONGGANG DONG ET AL: "Dissimilar metal joining of aluminum alloy to galvanized steel with AlSi, AlCu, AlSiCu and ZnAl filler wires", JOURNAL OF MATERIALS PROCESSING TECHNOLOGY, ELSEVIER, NL, vol. 212, no. 2, 13 October 2011 (2011-10-13), pages 458-464, XP028119941, ISSN: 0924-0136, DOI: 10.1016/J.JMATPROTEC.2011.10.009 [retrieved on 2011-10-19]
- Hyoung Jin Park ET AL: "Joining of Steel to Aluminum Alloy by AC Pulse MIG Welding", MATERIALS TRANSACTIONS, 1 January 2009 (2009-01-01), pages 2314-2317, XP055312518, Sendai DOI: 10.2320/matertrans.M2009105 Retrieved from the Internet: URL:https://www.jim.or.jp/journal/e/pdf3/5 0/09/2314.pdf [retrieved on 2016-10-20]
- PINTO L A ET AL: "LASER WELDING OF DISSIMILAR ALUMINIUM ALLOYS WITH FILLER MATERIALS", WELDING IN THE WORLD, SPRINGER, vol. 54, no. 11-12, 1 November 2010 (2010-11-01), pages R333-R341, XP001558940, ISSN: 0043-2288

## Description

The present invention relates to a welding filler material for bonding different kind materials and a method for producing a different kind material welded structure using this welding filler material. More particularly, the present invention relates to a welding filler material for bonding different kind materials for bonding an aluminum material or an aluminum alloy material and a steel material and a method for producing a different kind material welded structure.

In recent years, in transportation machines such as an automobile, a different kind material welded structure formed by bonding an aluminum material or an aluminum alloy material with a steel material is used for automotive parts and the like from the viewpoint of weight reduction. Generally, when the different kind material welded structure made of an aluminum material or an aluminum alloy material and a steel material is formed, a mechanical bonding method using rivets and adhesion together is used. This method, however, has high cost and has the limitation of applicable materials.

On the other hand, a method for bonding the aluminum material or the aluminum alloy material and the steel material using a welding filler material made of an aluminum alloy by methods such as welding and brazing has been also suggested. These bonding methods, however, have problems of generating a brittle intermetallic compound at the bonding interface and thus reducing bonding strength. Consequently, a welding filler material intended to increase the bonding strength by determining a Si content in an aluminum alloy in a specific range by focusing attention on Si contained in the welding filler material is suggested (for example, refer to Patent Literatures 1 to 3).

For the purpose of improving tensile shear strength at a welding joint part and peel strength at a welding part interface, a wire containing a flux for welding different kind material in which a sheath material is formed of an aluminum alloy containing specific amounts of Si and Zr is also suggested (refer to Patent Literature 4).
Kobelco Technology Review No. 31, pages 90 to 95, describes dissimilar metal joining technology using newly developed aluminum flux-cored wire (FCW) to join aluminum alloy and steel. N. Ramanaiah et al., International Journal of Advanced Manufacturing Technology, vol. 64, pages 1545 to 1554, describes the effect of modified AA4043 filler on corrosion behavior of AA6061 alloy GTA welds. JP S63 123959 A discloses an aluminum filler material with reduced generation of micro-cracks.

Patent Literature 1: Japanese Unexamined Patent Application Publication No. 2006-224147
Patent Literature 2: Japanese Unexamined Patent Application Publication No. 2010-201448
Patent Literature 3: Japanese Unexamined Patent Application Publication No. 2011-36918
Patent Literature 4: Japanese Unexamined Patent Application Publication No. 2012-71341

The conventional welding filler materials described in Patent Literatures 1 to 3 described above can improve the peel strength of joints. However, cracks may tend to be easily generated at the bonded part. On the other hand, use of a wire containing the flux described in Patent Literature 4 as a welding filler material allows the finer microstructure of a fused part to be formed and generation of microcracks at a welded metal part to be suppressed. However, the wire containing the flux described in Patent Literature 4 forms the sheath material with an aluminum alloy containing Zr and thus coarse compounds of Zr are generated in the aluminum alloy during the production process. Consequently, wires may break during a wire drawing process depending on process conditions.

Therefore, the main purpose of the present invention is to provide the welding filler material for bonding different kind materials that improves the joint strength, reduces cracks at the bonded part, and has difficulty in break occurrence at the time of the wire drawing process in the different kind material bonding of the aluminum material or aluminum alloy material and the steel material, and the method for producing the different kind material welded structure.

The welding filler material for bonding different kind materials according to the present invention is a welding filler material for bonding different kind materials used at the time of bonding an aluminum material or an aluminum alloy material and a steel material; the welding filler material comprising: a sheath material comprising an aluminum alloy consisting of at least 1.0% by mass to 3.0% by mass of Si and 0.01% by mass to 0.30% by mass of Ti and, optionally, 0.01% by mass to 0.3% by mass of Zr, 0.1% by mass or less of Mg, 0.1% by mass or less of Cu, 0.3% by mass or less of Fe, and 0.1% by mass or less of Mn, with the remainder being aluminum and inevitable impurities of 0.1% by mass or less of Cr, 0.1% by mass or less of Zn, 40ppm or less of B and 0.05% by mass or less of other elements, with the total of impurities not exceeding 0.15% by mass; and a flux filled in the sheath material, wherein the flux contains 7% by mass to 15% by mass of AlF₃ or 20% by mass to 60% by mass of CsF and the remainder is substantially made of KAlF, and wherein a filling rate of the flux is 2.0 % by mass to 20.0% by mass relative to a mass of a whole wire.

A method for producing a different kind material welded structure according to the present invention is a method for producing a different kind material welded structure constituted by an aluminum material or an aluminum alloy material and a steel material, and the method has the steps of applying a flux so that an applied amount of the flux to at least one of the aluminum material or the aluminum alloy material and the steel material is 0.5 mg/cm³ to 10 mg/cm³, wherein the flux contains 7% by mass to 15% by mass of AlF₃ or 20% by mass to 60% by mass of CsF and the remainder is substantially made of KAlF; forming a joint part with the aluminum material or the aluminum alloy material and the steel material; and welding the aluminum material or the aluminum alloy material and the steel material while a welding filler material made of an aluminum alloy consisting of at least 1.0% by mass to 3.0% by mass of Si and 0.01% by mass to 0.30% by mass of Ti and, optionally, 0.01% by mass to 0.3% by mass of Zr, 0.1% by mass or less of Mg, 0.1% by mass or less of Cu, 0.3% by mass or less of Fe, and 0.1% by mass or less of Mn, with the remainder being aluminum and inevitable impurities of 0.1% by mass or less of Cr, 0.1% by mass or less of Zn, 40ppm or less of B and 0.05% by mass or less of other elements, with the total of impurities not exceeding 0.15% by mass is fed to the joint part.

A method for producing a different kind material welded structure according to the present invention is a method for producing a different kind material welded structure constituted by an aluminum material or an aluminum alloy material and a steel material and the method has the steps of: forming a joint part with the aluminum material or the aluminum alloy material and the steel material; and welding the aluminum material or the aluminum alloy material and the steel material while a welding filler material comprising: a sheath material made of an aluminum alloy consisting of at least 1.0% by mass to 3.0% by mass of Si and 0.01% by mass to 0.30% by mass of Ti and, optionally, 0.01% by mass to 0.3% by mass of Zr, 0.1% by mass or less of Mg, 0.1% by mass or less of Cu, 0.3% by mass or less of Fe, and 0.1% by mass or less of Mn, with the remainder being aluminum and inevitable impurities impurities of 0.1% by mass or less of Cr, 0.1% by mass or less of Zn, 40ppm or less of B and 0.05% by mass or less of other elements, with the total of impurities not exceeding 0.15% by mass; and a flux filled in the sheath material, wherein the flux contains 7% by mass to 15% by mass of AlF₃ or 20% by mass to 60% by mass of CsF and the remainder is substantially made of KAlF; and wherein a filling rate of the flux is 2.0 % by mass to 20.0% by mass relative to a mass of a whole wire, is fed to the joint part.

According to the present invention, the welding filler material or the sheath material thereof is formed of the aluminum alloy that contains the specific amount of Si and Ti and thus the different kind material welded structure that has excellent wire drawing processability at the time of welding filler material production, and has high strength of joints and is difficult to generate cracks at a welded metal part when the aluminum material or the aluminum alloy material and the steel material are bonded by welding can be obtained.

[Fig. 1] Fig. 1 is a perspective view schematically illustrating one example of the method for producing the different kind material welded structure in a third embodiment of the present invention.
[Fig. 2] Fig.2 is a cross-sectional view taken along the line A-A shown in Fig 1.
[Fig. 3] Fig. 3 is a cross-sectional view schematically illustrating a method of the tensile shear strength test of the welded metal part of the different kind material welded structure.
[Fig. 4] Fig. 4 is a cross-sectional view schematically illustrating a method of the peel strength test of the welded metal part of the different kind material welded structure.
[Fig. 5A] Fig. 5A is a cross-sectional view schematically illustrating a shape of the welded metal part.
[Fig. 5B] Fig. 5B is a cross-sectional view schematically illustrating a shape of the welded metal part.
[Fig. 5C] Fig. 5C is a cross-sectional view schematically illustrating a shape of the welded metal part.

Hereinafter, embodiments for carrying out the present invention will be described in detail. The present invention, however, is not limited to the embodiments described below.

### (Welding filler material)

First, a welding filler material will be described in general. The welding filler material is formed of the aluminum alloy containing at least 1.0% by mass to 3.0% by mass of Si and 0.01% by mass to 0.30% by mass of Ti with a remainder being aluminum and inevitable impurities. The aluminum alloy forming this welding filler material can contain Zr, Mg, Cu, Fe, Mn, and the like, if needed. The welding filler material is used at the time of bonding the aluminum material or the aluminum alloy material and the steel material in the form of, for example, a solid wire.

The reasons of numerical limitation for each composition of the aluminum alloy that forms the welding filler material will be described below.

### [Si: 1.0% by mass to 3.0% by mass]

Si has an effect for improving the tensile shear strength and the peel strength at the joint part. When the Si amount in the aluminum alloy is less than 1.0% by mass, however, this effect is insufficient. In addition, when the Si amount in the aluminum alloy is less than 1.0% by mass, break at a bonded part interface is difficult to occur. However, this Si content increases crack sensitivity at the welded metal part and, microcracks are likely to be generated at the welded metal part when the thermal expansion difference between the aluminum alloy material and the steel material being members to be bonded.

In contrast, when the Si amount in the aluminum alloy is increased, the tensile shear strength is improved in a certain degree. When the Si content in the aluminum alloy is more than 6.0% by mass, however, toughness in the vicinity of the bonded part deteriorates and the peel strength deteriorates. Consequently, in the welding filler material, the Si content in the aluminum alloy is determined to be 1.0% by mass to 3.0% by mass. This Si content can improve both tensile shear strength and peel strength.

### [Ti: 0.01% by mass to 0.3% by mass]

Ti has an effect of forming finer microstructure at the welded metal part and suppressing generation of microcracks (cracks) at the welded metal part. When the Ti amount in the aluminum alloy is less than 0.01% by mass, however, the effect of forming the finer microstructure of the welded metal part is insufficient. In contrast, when the Ti amount in the aluminum alloy is more than 0.3% by mass, viscosity of melted metal increases and thus wet-spreading of the welding filler material is impeded. Consequently, the strength, particularly the peel strength of the welded joint deteriorates.

When the Si content is more than 10% by mass, the effect of increase in the viscosity of the melted metal caused by Ti is not significant due to the action of wettability improvement caused by Si. In contrast, when the Si content is less than 6% by mass, particularly less than 2% by mass, the action of wettability improvement caused by Si does not work sufficiently and thus the viscosity is easily affected by Ti.

Therefore, in the welding filler material, the Ti content in the aluminum alloy is determined to be 0.01% by mass to 0.3% by mass. The Ti content is preferably determined to be 0.05% by mass to 0.25% by mass. This content further promotes the formation of finer microstructure at the welded metal part and thus generation of fine cracks can be prevented and high strength can be maintained.

### [Zr: 0.01% by mass to 0.30% by mass]

Similar to Ti, Zr also has an effect of forming finer microstructure at the welded metal part and suppressing generation of cracks at the welded metal part. Consequently, Zr can be added if needed. When the Zr is added together with Ti, further finer microstructure at the welded metal part can be formed, coupled with the effect of forming finer microstructure caused by Ti.

When the finer microstructure at the welded metal part is intended to be formed by Zr alone, the relatively large amount of Zr is required to be added. However, Zr tends to form coarse Zr compounds. When such coarse Zr compounds are generated, break may occur from the vicinity of the coarse compounds as starting points at the time of wire drawing process for obtaining a welding filler material wire. On the other hand, use of Zr and Ti at the same time like the welding filler material enables the amount of added Zr to be reduced. Consequently, generation of the coarse Zr compounds can be reduced and deterioration in the wire drawing processability can be suppressed.

When the Zr amount in the aluminum alloy is less than 0.01% by mass, however, the effect of forming finer microstructure at the welded metal part is hardly different from the effect when Ti alone is added. In contrast, when more than 0.30% by mass of Zr is added, the coarse Zr compounds are generated during the production process of the welding filler material and thus the wire drawing processability of the welding filler material deteriorates. Consequently, when Zr is added together with Ti in the welding filler material, a Zr content is determined to be 0.01% by mass to 0.30% by mass. From the viewpoint of wet-spreading properties of the welding filler material, the amount of added Zr is desirably 0.50% by mass or less in total with Ti.

### [Mg: 0.1% by mass or less, Cu: 0.1% by mass or less, Fe: 0.3% by mass or less, and Mn: 0.1% by mass or less]

Mg, Cu, Fe, and Mn are solid-solutionized in an aluminum matrix and have an effect of improving the strength of the welding filler material. Therefore, the strength of the welding filler material itself is improved and, for example, handling properties when the welding filler material is processed into a wire shape can be improved by adding at least one of these elements in addition to Si and Ti described above.

When more than 0.4% by mass of Mg is contained or more than 0.8% by mass of Cu is contained, however, crack are generated at the welded metal part and thus the peel strength significantly deteriorates. When more than 0.8% by mass of Fe is contained or more than 0.4% by mass of Mn is contained, the reduction effect of an Al-Fe-based intermetallic compound at the bonded part is lowered and thus the peel strength significantly deteriorates.

Consequently, when these elements are added to the aluminum alloy in the welding filler material, from the viewpoint of improving the peel strength, contents of these compositions are determined to be Mg of 0.1% by mass or less, Cu of 0.1% by mass or less, Fe of 0.3% by mass or less, and Mn of 0.1% by mass or less.

### [Remainder: Al and inevitable impurities]

The remainder of the aluminum alloy forming the welding filler material is Al and inevitable impurities. Examples of the inevitable impurities described here include Cr, Zn, and B. Contents of these elements are, for example, 0.1% by mass or less of Cr, 0.1% by mass or less of Zn, 40 ppm or less of B, and 0.05% by mass or less of other elements. The total amount of the inevitable impurities is less than 0.15% by mass.

As described above, the welding filler material is formed of the aluminum alloy in which the Si content is 1.0% by mass to 3.0% by mass and the specific amount of Ti is contained and thus the tensile shear strength and the peel strength can be improved and the microcracks at the welded metal part can be also suppressed. The aluminum alloy forming the welding filler material may contain Zr as an optionally added composition. When Zr is contained, the amount of Zr is small. Consequently, coarse grains of Zr are difficult to be generated and the welding filler material has excellent wire drawing processability.

By forming the welding filler material using the aluminum alloy containing Si and specific amounts of Ti and Zr, further finer microstructure at the welded metal part can be formed and the peel strength of the welding joint part can be further improved. On the other hand, by containing at least one of Mg, Cu, Fe, and Mn in the aluminum alloy forming the welding filler material in a specific amounts or less, the handling properties at the time of wire processing can be improved with suppressing reduction in the welded joint strength.

### (First Embodiment)

Subsequently, a welding filler material according to a first embodiment of the present invention will be described. The welding filler material of this embodiment is, for example, a wire containing a flux. A sheath material is formed of the aluminum alloy described above in general. That is, the welding filler material of the present invention is constituted by a sheath material comprising an aluminum alloy comprising at least 1.0% by mass to 3.0% by mass of Si and 0.01% by mass to 0.30% by mass of Ti with a remainder being aluminum and inevitable impurities and a flux filled in the sheath material.

A filling rate of the flux in the welding filler material of this embodiment is 2.0% by mass to 20.0% by mass relative to the mass of the whole wire. Zr, Mg, Cu, Fe, Mn, and the like can be added to the aluminum alloy forming the welding filler material of this embodiment, if needed. The welding filler material of this embodiment is used at the time of bonding the aluminum material or the aluminum alloy material and the steel material.

The reasons of numerical limitation for each constituent of the welding filler material of this embodiment will be described below. Here, the composition of the aluminum alloy is the same composition as the aluminum alloy as described above in general, and thus description is omitted.

### [Flux filling rate: 2.0% by mass to 20.0% by mass]

The flux has a reduction effect to the aluminum material or the aluminum alloy material and the steel material that are targets to be bonded and has an effect of promoting wet-spread of the melted metal. When the filling rate of the flux is less than 2.0% by mass, however, the reduction effect and the effect of wet spreading of the melted metal are insufficient and thus the joint strength deteriorates.

In contrast, when the filling rate of the flux is more than 20.0% by mass, the reduction effect is saturate and melted slug intervenes at the bonded part, and whereby the joint strength, particularly the peel strength deteriorates. Consequently, in the welding filler material of this embodiment, the amount of the flux (flux filling rate) filled in the sheath material is determined to be 2.0% by mass to 20.0% by mass to the mass of the whole wire.

From the viewpoint of the bonding strength, the flux contains AlF₃ and cesium fluoride as a main composition. Specifically, the flux that contains AlF₃ of 7% by mass to 15% by mass or cesium fluoride of 20% by mass to 60% by mass as a main composition and the remainder is substantially made of KAlF (potassium aluminum fluoride)-based flux is used.

Here, the KAlF-based flux means a flux containing one or more fluoride containing K and/or Al such as KAlF₄, K₂AlF₅, K₃AlF₆, and KF (excluding AlF₃). This KAlF-based flux may contain compositions other than the fluoride such as Al₂O₃ in a slight amount within a range of not impairing the effect of the present invention.

The welding filler material of this embodiment can improve the tensile shear strength and the peel strength and also can suppress the microcracks at the welded metal part because the sheath material is formed of the aluminum alloy in which the Si content is 1.0% by mass to 3.0% by mass and the specific amount of Ti is contained. The aluminum alloy forming the sheath material may contain Zr as an optionally added composition. When Zr is contained, the amount of Zr is small. Consequently, the coarse compounds of Zr are difficult to be generated and the welding filler material has excellent wire drawing processability.

The welding filler material of this embodiment can improve the reduction performance of the flux and the wettability to the melted metal (melted aluminum) and can improve the joint strength in different kind material bonding of the aluminum material or the aluminum alloy material and the steel material even when the Si content is low because the filling rate of the flux is determined in a specific range.

### (Second Embodiment)

Subsequently, a method for producing the different kind material welded structure according to the second embodiment of the present invention will be described. In the method for producing the different kind material welded structure of this embodiment, the different kind material bonding of the aluminum material or the aluminum alloy material and the steel material is carried out by using the welding filler material described in general or the welding filler material of the first embodiment

For example, when the welding filler material described above in general is used, first, the flux is applied to at least one of the welded parts of the aluminum material or the aluminum alloy material and the steel material and the vicinity of the welded parts. At this time, the applied amount of the flux is determined to be 0.5 mg/cm³ to 10 mg/cm³. When the applied amount of the flux is less than 0.5 mg/cm³, the reduction effect and the effect of wet spreading of the melted metal are insufficient and thus the joint strength deteriorates. In contrast, when the applied amount of the flux is more than 10 mg/cm³, the reduction effect is saturate and melted slug intervenes at the bonded part, and whereby the joint strength, particularly the peel strength deteriorates.

The application method of the flux is not particularly limited. The application can be carried out by various methods such as brushing and spray coating. Similar to the first embodiment described above, the flux containing AlF₃ or cesium fluoride as the main composition is used from the viewpoint of the bonding strength.

On the other hand, when the welding filler material of the first embodiment is used, fusion welding is carried out with feeding the wire at the fused part without applying the flux.

Here, kinds of materials to be bonded that constitutes the different kind material welded structure are not particularly limited. For example, the JIS A1000-based aluminum can be used as the aluminum material. In addition, for example, JIS A2000-based aluminum alloy (Al-Cu-based alloy), JIS A3000-based aluminum alloy (Al-Mn-based alloy), JIS A4000-based aluminum alloy (Al-Si-based alloy), JIS A5000-based aluminum alloy (Al-Mg-based alloy), JIS A6000-based aluminum alloy (Al-Mg-Si-based alloy), and JIS A7000-based aluminum alloy (Al-Zn-Mg-based alloy and Al-Zn-Mg-Cu-based alloy) can be used as the aluminum alloy material.

On the other hand, SPCC (cold-rolled low-carbon steel material), a high-tension steel material, a stainless steel material, and the like can be used as the steel material. A galvanizing coated steel material whose surface is subjected to hot-dip galvanization (GA steel material and GI steel material) and an aluminum-plated steel material to which aluminum plating is applied may also be used as the steel material.

Further, the thickness and the shape of the materials to be bonded is not particularly limited. For example, a sheet material, an extrusion material, a forged material, and a cast material such as a die cast material having a thickness of 0.5 mm to 4.0 mm can be used. The aluminum material or the aluminum alloy material and the steel material may have the same thickness. However, the aluminum material or the aluminum alloy material and the steel material having different thicknesses may also be used.

In the method for producing the different kind material welded structure of this embodiment, a method for bonding the aluminum material or the aluminum alloy material and the steel material is not particularly limited. For example, laser welding using YAG laser, CO₂ laser, fiber laser, disk laser, semiconductor laser, and the like, MIG welding, TIG welding, hybrid welding using laser welding and MIG welding at the same time are applicable.

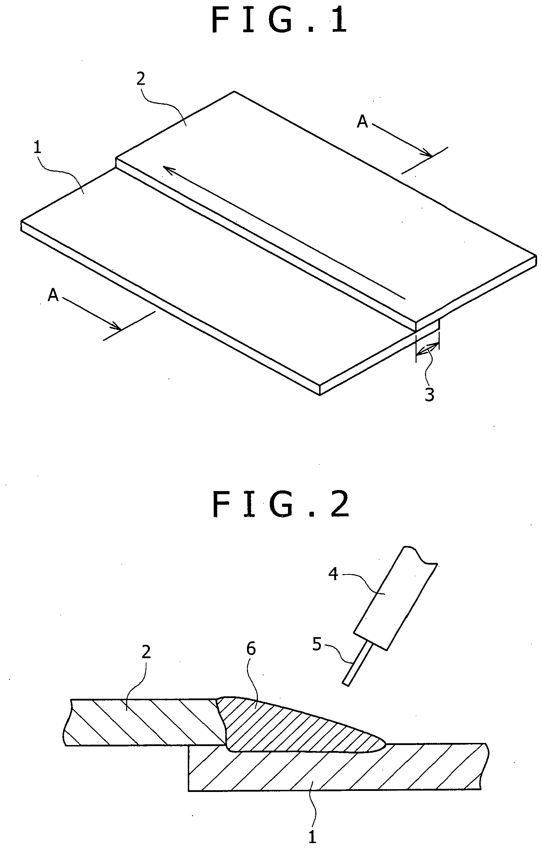

Fig. 1 is a perspective view schematically illustrating one example of the method for producing the different kind material welded structure of this embodiment and Fig. 2 is a cross-sectional view taken along the line A-A shown in Fig 1. As illustrated in Fig. 1 and Fig. 2, in the method for producing the different kind material welded structure of this embodiment, first, an aluminum (alloy) material 2 is placed at the side of a torch 4, that is, upside of a steel material 1 and the edge part of the aluminum (alloy) material 2 is overlapped on the edge part of the steel material 1.

Subsequently, at this overlapped part 3, alternating-current arc is generated between the welding filler material fed from the torch 4, that is, a welding wire 5 and the materials to be welded (the steel material 1 and the aluminum (alloy) material 2). This arc removes surface oxide film of the steel material 1 by the cleaning action of the arc in a cycle in which the welding wire 5 being an electrode wire is a positive electrode. In addition, the edge parts of the steel material 1 and the aluminum (alloy) material 2 are melted by the arc heat.

Thereafter, the overlapped part 3 was overlapped to carry out fillet welding by moving the torch 4 along the edge parts of the steel material 1 and the aluminum (alloy) material 2 with generating arc and whereby the different kind material welded structure is obtained. As described above, in the method for producing the different kind material welded structure of this embodiment, the melted metal sufficiently wets the surface of the steel material 1 and spreads on the surface of the steel material 1 because the steel material 1 from which the oxide film is removed by the cleaning action is melted by the arc heat.

In the welding of the steel material 1 and the aluminum (alloy) material 2, the melted metal of the steel material 1, the melted metal of the welding wire 5 (Al-Si-Ti-based welding filler material, Al-Si-Ti-Zr-based welding filler material, and the like), and the aluminum (alloy) material 2 melted by the arc are mixed and diluted. Consequently, these are metallically bonded and intermetallic compounds are generated. In the method for producing the different kind material welded structure of this embodiment, the amounts of the compositions added to the welding filler material are determined in the specific ranges. Therefore excessive generation of an Al-Fe binary brittle intermetallic compound can be suppressed and the steel material 1 and the aluminum (alloy) material 2 can be excellently bonded in a wide area.

In addition, use of an appropriate amount of the flux enables the wet-spread of the melted metal to be promoted and bead having a wide width (bead having long leg length) to be formed. Consequently, coupled with a finer microstructure forming effect at a welded metal part 6 caused by addition of Ti or Ti and Zr to the aluminum alloy forming the welding filler material, the different kind material welded structure having high toughness and high tensile shear strength and peel strength at the welded metal part 6 can be obtained.

In the method for producing the different kind material welded structure of this embodiment, MIG arc welding using the welding filler material described above in general or the welding filler material of the first embodiment is described as an example. However, the method for bonding is not limited to MIG welding and fusion welding methods using the welding filler material such as TIG welding, arc welding, hybrid welding using laser welding and MIG welding at the same time are applicable.

In the method for producing the different kind material welded structure of this embodiment, the plate-like shape steel material 1 and the aluminum (alloy) material 2 are used as the materials to be welded. However, the shapes of the steel material 1 and the aluminum (alloy) material 2 are not necessary a whole plate-like shape but the part overlapped each other may be a plate-like shape. Consequently, the method is applicable to shaped materials having various shapes, castings, and the like. The shape of the different kind material joint is not limited to the lap joint, but any joints such as a butt joint, a T-shaped joint, a flare joint, and the like are applicable.

The method for producing the different kind material welded structure of the present invention is not limited to the bonding methods and bonding conditions described above but various bonding methods using the welding filler material are applicable.

### Examples

Hereinafter, the effect of the present invention will be specifically described with reference to Examples, Reference Examples and Comparative Examples of the present invention. In Examples, solid wires (Examples 17 to 19 and 21, which represent Reference Examples) and Comparative Examples (Comparative Examples 12 and 13) thereof corresponding to the welding filler material described above in general and wires containing flux (Examples 1 to 16, 20, and 22 to 29, of which Examples 3 to 8 and 10 represent Reference Examples) and Comparative Examples (Comparative Examples 1 to 11) thereof corresponding to the first embodiment were prepared using aluminum alloys having compositions listed in Table 1 and Table 2 and evaluated. The remainders of the aluminum alloy compositions listed in Table 1 and Table 2 are aluminum and inevitable impurities.

**[Table 1]**

| | Aluminum alloy composition (% by mass) | | | | | | | Type of wire |
|---|---|---|---|---|---|---|---|---|
| | Si | Ti | Zr | Mg | Cu | Fe | Mn | |
| Example 1 | 1.7 | 0.20 | - | - | - | - | - | FCW |
| Example 2 | 1.6 | 0.20 | 0.20 | - | - | - | - | FCW |
| Example 3 | 1.6 | 0.20 | 0.20 | 0.2 | - | - | - | FCW |
| Example 4 | 1.6 | 0.20 | - | - | 0.7 | - | - | FCW |
| Example 5 | 1.6 | 0.20 | - | - | - | 0.7 | - | FCW |
| Example 6 | 1.6 | 0.20 | - | - | - | - | 0.3 | FCW |
| Example 7 | 1.6 | 0.20 | - | 0.3 | 0.3 | - | - | FCW |
| Example 8 | 1.6 | 0.20 | - | - | 0.4 | 0.3 | - | FCW |
| Example 9 | 1.1 | 0.18 | - | - | - | - | - | FCW |
| Example 10 | 5.8 | 0.20 | - | - | - | - | - | FCW |
| Example 11 | 1.8 | 0.02 | - | - | - | - | - | FCW |
| Example 12 | 1.8 | 0.27 | - | - | - | - | - | FCW |
| Example 13 | 1.8 | 0.20 | 0.01 | - | - | - | - | FCW |
| Example 14 | 1.8 | 0.20 | 0.28 | - | - | - | - | FCW |
| Example 15 | 1.8 | 0.20 | - | - | - | - | - | FCW |
| Example 16 | 1.8 | 0.20 | - | - | - | - | - | FCW |
| Example 17 | 1.7 | 0.20 | - | - | - | - | - | Solid |
| Example 18 | 1.7 | 0.20 | - | - | - | - | - | Solid |
| Example 19 | 1.8 | 0.20 | - | - | - | - | - | Solid |
| Example 20 | 1.8 | 0.20 | - | - | - | - | - | FCW |
| Example 21 | 1.8 | 0.20 | - | - | - | - | - | Solid |
| Example 22 | 1.7 | 0.20 | - | - | - | - | - | FCW |
| Example 23 | 1.7 | 0.20 | - | - | - | - | - | FCW |
| Example 24 | 1.7 | 0.20 | - | - | - | - | - | FCW |
| Example 25 | 1.7 | 0.20 | - | - | - | - | - | FCW |
| Example 26 | 1.7 | 0.20 | - | - | - | - | - | FCW |
| Example 27 | 1.7 | 0.20 | - | - | - | - | - | FCW |
| Example 28 | 1.7 | 0.20 | - | - | - | - | - | FCW |
| Example 29 | 1.7 | 0.20 | - | - | - | - | - | FCW |

**[Table 2]**

| | Aluminum alloy composition (% by mass) | | | | | | | Type of wire |
|---|---|---|---|---|---|---|---|---|
| | Si | Ti | Zr | Mg | Cu | Fe | Mn | |
| Comparative example 1 | 0.7 | - | - | - | - | - | - | FCW |
| Comparative example 2 | 6.5 | - | - | - | - | - | - | FCW |
| Comparative example 3 | 1.8 | - | - | - | - | - | - | FCW |
| Comparative example 4 | 1.8 | 0.40 | - | - | - | - | - | FCW |
| Comparative example 5 | 1.8 | 0.20 | 0.40 | - | - | - | - | FCW |
| Comparative example 6 | 1.8 | 0.20 | - | 0.4 | - | - | - | FCW |
| Comparative example 7 | 1.8 | 0.20 | - | - | 1.2 | - | - | FCW |
| Comparative example 8 | 1.8 | 0.20 | - | - | - | 1.1 | - | FCW |
| Comparative example 9 | 1.8 | 0.20 | - | - | - | - | 0.5 | FCW |
| Comparative example 10 | 1.8 | 0.20 | - | - | - | - | - | FCW |
| Comparative example 11 | 1.8 | 0.20 | - | - | - | - | - | FCW |
| Comparative example 12 | 1.8 | 0.20 | - | - | - | - | - | FCW |
| Comparative example 13 | 1.8 | 0.20 | - | - | - | - | - | FCW |
| Comparative example 14 | 0.7 | - | - | - | - | - | - | FCW |
| Comparative example 15 | 12.0 | - | - | - | - | - | - | FCW |
| Comparative example 16 | 1.8 | - | - | - | - | - | - | FCW |
| Comparative example 17 | 1.8 | 0.40 | - | - | - | - | - | FCW |
| Comparative example 18 | 1.8 | 0.20 | 0.40 | - | - | - | - | Solid |
| Comparative example 19 | 1.8 | 0.20 | - | 0.4 | - | - | - | Solid |

In the evaluation, as illustrated in Fig. 1, the aluminum alloy material and the steel material were overlapped to carry out laser welding or MIG welding and the presence or absence of cracks at the welded part, the tensile shear strength, and the peel strength of the obtained different kind material welded structure were measured. At this time, a sheet material of AA6022 alloy (JIS A6000-based alloy) was used as the aluminum alloy material. In the MIG welding test and the laser welding test, the sheet material having a sheet thickness of 2.0 mm and the sheet material having a sheet thickness of 1.0 mm were used, respectively.

As the steel material, a 980 MPa-class cold rolled steel sheet or a steel sheet formed by subjecting this cold rolled steel to hot-dip galvanization and then alloying the galvanization layer (GA steel sheet), a stainless steel (SUS 304), a steel sheet formed by subjection a 590 MPa-class steel sheet to hot-dip galvanization (GI590 steel sheet), and a cold rolled steel sheet (SPCC) having a sheet thickness of 1.4 mm were used. As the flux, a flux containing 12% by mass of AlF₃ with the remainder being substantially KAlF-based flux (72% by mass of KAlF₄ and 28% by mass of K₃AlF₆ in the KAlF-based flux) was used in the MIG welding test and a flux containing 28% by mass of CsF with the remainder being substantially KAlF-based flux (72% by mass of KAlF₄ and 28% by mass of K₃AlF₆ in the KAlF-based flux) was used in the laser welding test.

In MIG welding test, the aluminum sheet was overlapped with the steel sheet. The aluminum alloy material was located in the MIG torch side and the atmosphere of the circumference of the overlapped part was replaced with a shield gas atmosphere. Argon gas was used as the shield gas. Under these conditions, electricity was conducted to the overlapped part 2 using each wire containing flux for welding different kind materials (diameter 1.2 mm) in Examples, Reference Examples and Comparative Examples to carry out the lap MIG welding. A MIG welder for welding the overlapped part used alternating-current pulse type MIG welding power source under conditions of a current of 90A to 110A, a voltage of 16V to 18V, and a welding speed of 50 cm/minute.

On the other hand, in the laser welding test, the aluminum sheet and the steel sheet were overlapped and the aluminum alloy sheet was located at the side of laser light. The atmosphere of the circumference of the overlapped part was replaced with a shield gas atmosphere. Argon gas was used as the shield gas. Under these conditions, the overlapped part was irradiated with laser light with feeding each wire (diameter 1.2 mm) in Examples, Reference Examples and Comparative Examples to the overlapped part to carry out the laser welding. As the laser irradiating the overlapped part, fiber laser (laser power: 3.5 kW) was used and the welding speed was determined to be 150 cm/minute.

### (Welding cracks)

In the evaluation in cracks at the welded metal part, the joint after welding was cut so that the welded metal part 6 was visible and the cross-sectional surface was polished and etched. Thereafter, the surface was observed with an optical microscope (magnification: 100 times to 400 times) to ascertain the presence or absence of the microcracks.

### (Tensile shear strength)

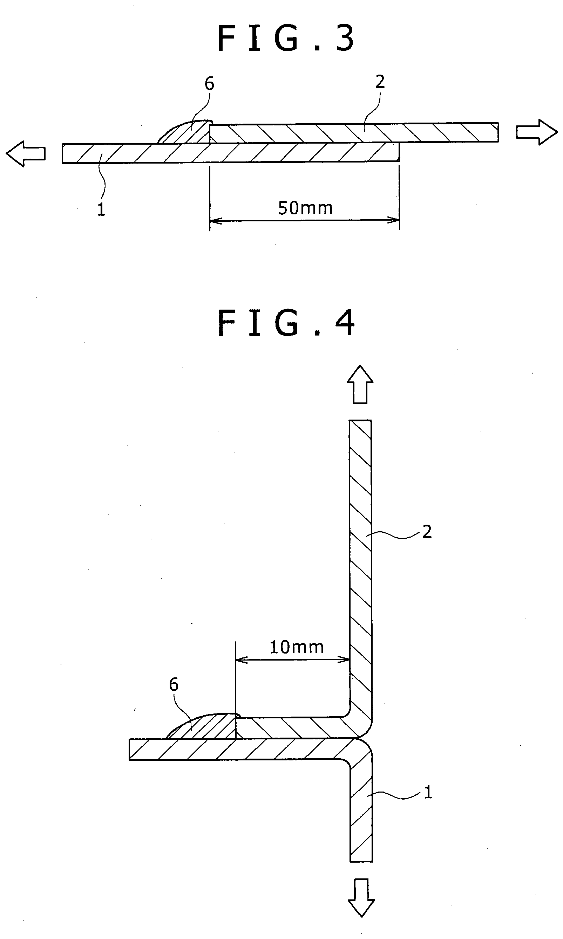

Fig. 3 is a cross-sectional view schematically illustrating the method of the tensile shear strength test. As illustrated in Fig. 3, the evaluation of the tensile shear strength was carried out using the lap-welded sheet material formed by the method described above. Specifically, first, the sheet material after welding was processed into a JIS No. 5 test specimen defined by JIS Z 2201-1998. At this time, the test specimen was arranged so that the welded metal part 6 was located at the center part in the parallel part. Each of the steel material 1 and the aluminum (alloy) material 2 were pulled in arrow directions illustrated in Fig. 3 using the tensile tester (manufactured by SHIMADZU CORPORATION, Uniaxial Tester RS-2) to measure the tensile shear strength of the welded metal part 6. At the same time, the break position was also ascertained.

### (Peel strength evaluation)

Fig. 4 is a cross-sectional view schematically illustrating a method of the peel strength test of the welded metal part of the different kind material welded structure. The peel strength evaluation was carried out by also using the sheet material formed by the lap welding as described above. Specifically, first, the sheet material after welding was processed into an elongated rectangle sheet having a width of 25 mm. Then, as illustrated in Fig. 4, the steel material 1 and the aluminum (alloy) material 2 were bent. Each of the steel material 1 and the aluminum (alloy) material 2 were pulled in arrow directions illustrated in Fig. 4 using the tensile tester (manufactured by SHIMADZU CORPORATION, Uniaxial Tester RS-2) to measure the peel strength of the welded metal part 6. At the same time, the break position was also ascertained.

### (Cross-sectional shape of welded metal part 6)

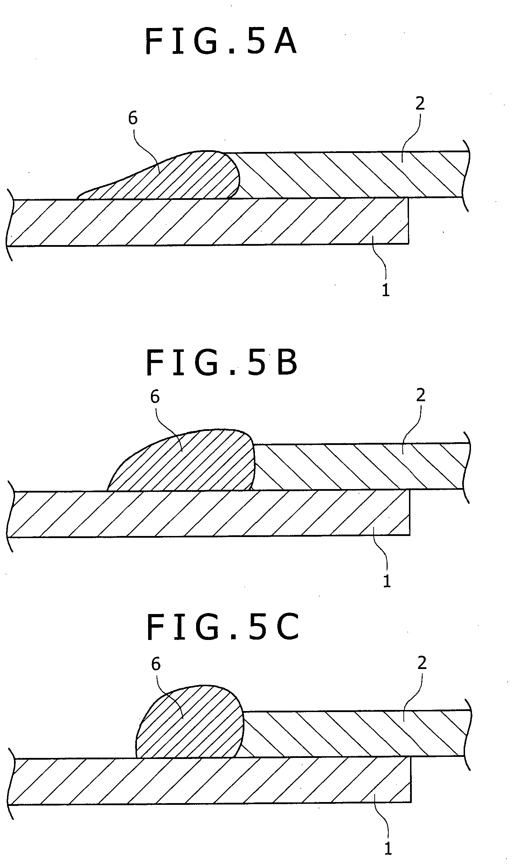

Fig. 5A to Fig. 5C are cross-sectional views schematically illustrating the shapes of the welded metal part 6. The cross-sectional shapes of the welded metal part 6 were classified into three types based on the results obtained by observing the samples formed by cutting the joints after welding along the cross section orthogonal to the welding line and polishing. Specifically, the shape in which the welded metal part 6 does not rise but is wetted and spread as illustrated in Fig. 5A is determined to be A (good); the shape in which the welded metal part 6 slightly rises as illustrated in Fig. 5B is determined to be B (permissible level); and the shape in which the welded metal part 6 rises as illustrated in Fig. 5C is determined to be C (disapproved level).

### (Comprehensive evaluation)

The comprehensive evaluation is determined as follows. The case where the tensile shear strength is more than 350 N/mm or more and the peel strength is more than 35 N/mm is determined to be ⊚. The case where the tensile shear strength is 200 N/mm or more and less than 350 N/mm and the peel strength is more than 10 N/mm is determined to be ○. The case other than these cases are determined to be ×.

### (Wire drawing processability)

Together with the evaluation of the joint, wire drawing processability was evaluated for each welding filler material in Examples, Reference Examples and Comparative Examples. Specifically, the wire drawing process from a diameter of 6 mm to a diameter of 1.2 mm was carried out by drawing (cold drawing). The case where the sample was not broken at all was determined to be ○ and the case where the sample was broken or the sample was not broken but the wire diameter of the sample was instable or defects were generated in the wire was determined to be ×.

The results obtained by the above tests are listed in Table 3 and Table 4.

**[Table 3]**

| | FCW | Solid | Aluminum alloy material | Steel material | Bonding method | Evaluation of joint | | | | | | | Wire drawing processability |
|---|---|---|---|---|---|---|---|---|---|---|---|---|---|
| | Flux filling rate (% by mass) | Applied amount of flux (mg/cm³) | | | | Welding cracks | Tensile shear strength test | | Peel strength test | | Welded metal shape | Comprehensive tion | |
| | | | | | | | Strength (N/mm) | Break position | Strength (N/mm) | Break position | | | |
| Example 1 | 5 | - | A6022 | GA980 | MIG | Absence | 350 | Al alloy sheet side | 35 | Al alloy sheet side | A | ⊚ | ○ |
| Example 2 | 5 | - | A6022 | GA980 | MIG | Absence | 370 | Al alloy sheet side | 40 | Al alloy sheet side | A | ⊚ | ○ |
| Example 3 | 5 | - | A6022 | GA980 | MIG | Absence | 340 | Al alloy sheet side | 20 | Al alloy sheet side | B | ○ | ○ |
| Example 4 | 5 | - | A6022 | GA980 | MIG | Absence | 350 | Al alloy sheet side | 15 | Al alloy sheet side | B | ○ | ○ |
| Example 5 | 5 | - | A6022 | GA980 | MIG | Absence | 270 | Al alloy sheet side | 30 | Al alloy sheet side | B | ○ | O |
| Example 6 | 5 | - | A6022 | GA980 | MIG | Absence | 280 | Al alloy sheet side | 25 | Al alloy sheet side | B | ○ | ○ |
| Example 7 | 5 | - | A6022 | GA980 | MIG | Absence | 290 | Al alloy sheet side | 15 | Al alloy sheet side | B | ○ | ○ |
| Example 8 | 5 | - | A6022 | GA980 | MIG | Absence | 250 | Al alloy sheet side | 20 | Al alloy sheet side | B | ○ | ○ |
| Example 9 | 5 | - | A6022 | GA980 | MIG | Absence | 210 | Al alloy sheet side | 45 | Al alloy sheet side | B | ○ | ○ |
| Example 10 | 5 | - | A6022 | GA980 | MIG | Absence | 340 | alloy sheet side | 12 | Al alloy sheet side | A | ○ | ○ |
| Example 11 | 5 | - | A6022 | GA980 | MIG | Absence | 270 | Al alloy sheet side | 15 | Al alloy sheet side | A | ○ | ○ |
| Example 12 | 5 | - | A6022 | GA980 | MIG | Absence | 280 | Al alloy sheet side | 25 | Al alloy sheet side | A | ○ | ○ |
| Example 13 | 5 | - | A6022 | GA980 | MIG | Absence | 360 | Al alloy sheet side | 45 | Al alloy sheet side | A | ⊚ | ○ |
| Example 14 | 5 | - | A6022 | GA980 | MIG | Absence | 370 | Al alloy sheet side | 40 | Al alloy sheet side | A | ⊚ | ○ |
| Example 15 | 2 | - | A6022 | GA980 | MIG | Absence | 240 | Al alloy sheet side | 16 | Al alloy sheet side | B | ○ | ○ |
| Example 16 | 19 | - | A6022 | GA980 | MIG | Absence | 280 | Al alloy sheet side | 12 | Al alloy sheet side | A | ○ | ○ |
| Example 17 | - | 0.6 | A6022 | GA980 | MIG | Absence | 280 | Al alloy sheet side | 15 | Al alloy sheet side | A | ○ | ○ |
| Example 18 | - | 5 | A6022 | GA980 | MIG | Absence | 330 | Al alloy sheet side | 40 | Al alloy sheet side | A | ○ | ○ |
| Example 19 | - | 9 | A6022 | GA980 | MIG | Absence | 320 | Al alloy sheet side | 15 | Al alloy sheet side | A | ○ | ○ |
| Example 20 | 5 | - | A6022 | GA980 | Laser | Absence | 290 | Al alloy sheet side | 45 | Al alloy sheet side | A | ○ | ○ |
| Example 21 | - | 5 | A6022 | GA980 | Laser | Absence | 280 | Al alloy sheet side | 45 | Al alloy sheet side | A | ○ | ○ |
| Example 22 | 5 | - | A7N01 | GA980 | MIG | Absence | 310 | Al alloy sheet side | 25 | Al alloy sheet side | A | ○ | ○ |
| Example 23 | 5 | - | AC4CH | GA980 | MIG | Absence | 320 | Al alloy sheet side | 15 | Al alloy sheet side | A | ○ | ○ |
| Example 24 | 5 | - | A5052 | GA980 | MIG | Absence | 230 | Al alloy sheet side | 15 | Al alloy sheet side | A | ○ | ○ |

**[Table 4]**

| | FCW | Solid | Aluminum alloy material | Steel material | Bonding method | Evaluation of joint | | | | | | | Wire drawing processability |
|---|---|---|---|---|---|---|---|---|---|---|---|---|---|
| | Flux filling rate (% by mass) | Applied amount of flux (mg/cm³) | | | | Welding cracks | Tensile shear strength test | | Peel strength test | | Welded metal shape | Comprehensive tion | |
| | | | | | | | Strength (N/mm) | Break position | Strength (N/mm) | Break position | | | |
| Example 25 | 5 | - | A3003 | GA980 | MIG | Absence | 290 | Al alloy sheet side | 40 | Al alloy sheet side | A | ○ | ○ |
| Example 26 | 5 | - | A6022 | CR980 * | MIG | Absence | 320 | Al alloy sheet side | 30 | Al alloy sheet side | B | ○ | ○ |
| Example 27 | 5 | - | A6022 | SUS304 | MIG | Absence | 350 | Al alloy sheet side | 35 | Al alloy sheet side | B | ○ | ○ |
| Example 28 | 5 | - | A6022 | GI590 | MIG | Absence | 320 | Al alloy sheet side | 30 | Al alloy sheet side | A | ○ | ○ |
| Example 29 | 5 | - | A6022 | SPCC | MIG | Absence | 220 | Steel sheet side | 30 | Al alloy sheet side | B | ○ | ○ |
| Compatative example 1 | 5 | - | A6022 | GA980 | MIG | Absence | 170 | Al alloy sheet side | 20 | Al alloy sheet side | A | × | ○ |
| Compatative example 2 | 5 | - | A6022 | GA980 | MIG | Absence | 200 | Al alloy sheet side | 5 | Interface | A | × | ○ |
| Compatative example 3 | 5 | - | A6022 | GA980 | MIG | Presence | 210 | Al alloy sheet side | 3 | Interface | B | × | ○ |
| Compatative example 4 | 5 | - | A6022 | GA980 | MIG | Absence | 210 | Al alloy sheet side | 5 | Interface | B | × | ○ |
| Compatative example 5 | 5 | - | A6022 | GA980 | MIG | Absence | 220 | Al alloy sheet side | 3 | Interface | B | × | × |
| Compatative example 6 | 5 | - | A6022 | GA980 | MIG | Presence | 205 | Al alloy sheet side | 7 | Interface | C | × | × |
| Compatative example 7 | 5 | - | A6022 | GA980 | MIG | Presence | 220 | Al alloy sheet side | 8 | Interface | C | × | ○ |
| Compatative example 8 | 5 | - | A6022 | GA980 | MIG | Absence | 140 | Interface | 7 | Interface | C | × | ○ |
| Compatative example 9 | 5 | - | A6022 | GA980 | MIG | Absence | 140 | Interface | 7 | Interface | C | × | ○ |
| Compatative example 10 | 1 | - | A6022 | GA980 | MIG | Presence | 90 | Interface | 0 | Interface | C | × | ○ |
| Compatative example 11 | 22 | - | A6022 | GA980 | MIG | Absence | 250 | Al alloy sheet side | 5 | Interface | B-C | × | ○ |
| Compatative example 12 | - | 0.3 | A6022 | GA980 | MIG | Presence | 80 | Interface | 0 | Interface | C | × | ○ |
| Compatative example 13 | - | 12 | A6022 | GA980 | MIG | Absence | 240 | Al alloy sheet side | 5 | Interface | C | × | ○ |
| Compatative example 14 | 5 | - | A3003 | GA980 | MIG | Absence | 290 | Al alloy sheet side | 40 | Al alloy sheet side | B-C | × | ○ |
| Compatative example 15 | 5 | - | A6022 | CR980 * | MIG | Absence | 320 | Al alloy sheet side | 30 | Al alloy sheet side | B-C | × | ○ |
| Compatative example 16 | 5 | - | A6022 | SUS304 | MIG | Absence | 350 | Al alloy sheet side | 35 | Al alloy sheet side | B-C | × | ○ |
| Compatative example 17 | 5 | - | A6022 | GI590 | MIG | Absence | 320 | Al alloy sheet side | 30 | Al alloy sheet side | C | × | ○ |
| Compatative example 18 | 5 | - | A6022 | SPCC | MIG | Absence | 220 | Steel sheet side | 30 | Al alloy sheet side | B | × | × |
| Compatative example 19 | 5 | - | A6022 | GA980 | MIG | Absence | 170 | Al alloy sheet side | 20 | Al alloy sheet side | C | × | × |

| | | | | | | | | | | | | | |
|---|---|---|---|---|---|---|---|---|---|---|---|---|---|
| * Cold-rolled non-galvanized 980 MPa-class steel sheet | | | | | | | | | | | | | |

As seen from Table 3 and Table 4, any of the different kind material welded structures prepared by using the wires of Examples 1, 2, 9, 11 to 16, 20 and 22 to 29 prepared within the scope of the present invention or the wires of Examples 3 to 8, 10, 17 to 19 and 21, which represent Reference Examples, had no cracks at the welded metal part and had both high tensile shear strength and peel strength. In addition, the wires of Examples 1 to 29 did not break during the wire drawing process and had excellent shapes at the welded metal parts and wire drawing processability.

On the contrary, in the different kind material welded structures prepared by using the wires of Comparative Examples 1 to 19 deviating from the scope of the present invention, generation of microcracks at the welded metal part, shape deterioration in the welded metal parts and reduction in the tensile shear strength were observed. In particular, the different kind material welded structures prepared by using the wires of Comparative Examples 1 to 13 had low peel strength. The wires of Comparative Examples 5, 6, 18, and 19 also had deteriorated wire drawing processability.

From the above results, it is ascertained that the welding filler material of the present invention is difficult to break at the time of wire drawing process and the joint strength is improved and the microcracks at the welded metal part can be prevented in the different kind material bonding of the aluminum material or the aluminum alloy material and the steel material by using the welding filler material of the present invention.

### Reference Signs List

- 1: Steel Material
- 2: Aluminum (Alloy) Material
- 3: Overlapped Part
- 4: Torch
- 5: Welding Wire (Welding Filler Material)
- 6: Welded Metal Part

## Claims

1. A welding filler material for bonding different kind materials used at the time of bonding an aluminum material or an aluminum alloy material and a steel material; the welding filler material comprising:
a sheath material comprising an aluminum alloy consisting of at least 1.0% by mass to 3.0% by mass of Si and 0.01% by mass to 0.30% by mass of Ti and, optionally, 0.01% by mass to 0.3% by mass of Zr, 0.1% by mass or less of Mg, 0.1% by mass or less of Cu, 0.3% by mass or less of Fe, and 0.1% by mass or less of Mn,
with the remainder being aluminum and inevitable impurities of 0.1% by mass or less of Cr, 0.1% by mass or less of Zn, 40ppm or less of B and 0.05% by mass or less of other elements, with the total of impurities not exceeding 0.15% by mass; and a flux filled in the sheath material,
wherein the flux contains 7% by mass to 15% by mass of AlF₃ or 20% by mass to 60% by mass of CsF and the remainder is substantially made of KAIF, and wherein a filling rate of the flux is 2.0 % by mass to 20.0% by mass relative to a mass of a whole wire.

2. A method for producing a different kind material welded structure constituted by an aluminum material or an aluminum alloy material and a steel material; the method comprising the steps of:
applying a flux so that an applied amount of the flux to at least one of the aluminum material or the aluminum alloy material and the steel material is 0.5 mg/cm³ to 10 mg/cm³,
wherein the flux contains 7% by mass to 15% by mass of AlF₃ or 20% by mass to 60% by mass of CsF and the remainder is substantially made of KAIF;
forming a joint part with the aluminum material or the aluminum alloy material and the steel material; and
welding the aluminum material or the aluminum alloy material and the steel material, while a welding filler material comprising an aluminum alloy consisting of at least 1.0% by mass to 3.0% by mass of Si and 0.01% by mass to 0.30% by mass of Ti and, optionally,
0.01% by mass to 0.3% by mass of Zr, 0.1% by mass or less of Mg, 0.1% by mass or less of Cu, 0.3% by mass or less of Fe, and 0.1% by mass or less of Mn, with the remainder being aluminum and inevitable impurities of 0.1% by mass or less of Cr, 0.1% by mass or less of Zn, 40ppm or less of B and 0.05% by mass or less of other elements, with the total of impurities not exceeding 0.15% by mass is fed to the joint part.

3. A method for producing a different kind material welded structure constituted by an aluminum material or an aluminum alloy material and a steel material; the method comprising the steps of:
forming a joint part with the aluminum material or the aluminum alloy material and the steel material; and
welding the aluminum material or the aluminum alloy material and the steel material, while a welding filler material comprising: a sheath material comprising an aluminum alloy consisting of at least 1.0% by mass to 3.0% by mass of Si and 0.01 % by mass to 0.30% by mass of Ti and, optionally,
0.01% by mass to 0.3% by mass of Zr, 0.1% by mass or less of Mg, 0.1% by mass or less of Cu, 0.3% by mass or less of Fe, and 0.1 % by mass or less of Mn, with the remainder being aluminum and inevitable impurities of 0.1 % by mass or less of Cr, 0.1% by mass or less of Zn, 40ppm or less of B and 0.05% by mass or less of other elements, with the total of impurities not exceeding 0.15% by mass;
and a flux filled in the sheath material,
wherein the flux contains 7% by mass to 15% by mass of AlF₃ or 20% by mass to 60% by mass of CsF and the remainder is substantially made of KAIF; and
wherein a filling rate of the flux is 2.0% by mass to 20.0% by mass relative to a mass of a whole wire is fed to the joint part.

## Patentansprüche

1. Schweißfüllmaterial zum Verbinden unterschiedlicher Arten von Materialien, verwendet zum Zeitpunkt des Verbindens eines Aluminiummaterials oder eines Aluminiumlegierungsmaterials und eines Stahlmaterials, wobei das Schweißfüllmaterial umfaßt:
ein Hüllmaterial, umfassend eine Aluminiumlegierung, bestehend aus mindestens 1,0 Masse-% bis 3,0 Masse-% Si und 0,01 Masse-% bis 0,30 Masse-% Ti und gegebenenfalls 0,01 Masse-% bis 0,3 Masse-% Zr, 0,1 Masse-% oder weniger Mg, 0,1 Masse-% oder weniger Cu, 0,3 Masse-% oder weniger Fe und 0,1 Masse-% oder weniger Mn,
wobei der Rest Aluminium und unvermeidbare Verunreinigungen von 0,1 Masse-% oder weniger Cr, 0,1 Masse-% oder weniger Zn, 40 ppm oder weniger B und 0,05 Masse-% oder weniger von anderen Elemente sind, mit der Gesamtheit an Verunreinigungen 0,15 Masse-% nicht überschreitend, und
ein Flußmittel, gefüllt in das Hüllmaterial,
wobei das Flußmittel 7 Masse-% bis 15 Masse-% AlF₃ oder 20 Masse-% bis 60 Masse-% CsF enthält und der Rest im Wesentlichen aus KAlF ist, und
wobei eine Füllrate des Flußmittels 2,0 Masse-% bis 20,0 Masse-% relativ zu einer Masse eines gesamten Drahtes ist.

2. Verfahren zur Herstellung einer geschweißten Struktur von unterschiedlicher Art von Materialien, aufgebaut durch ein Aluminiummaterial oder ein Aluminiumlegierungsmaterial und ein Stahlmaterial, wobei das Verfahren die Schritte umfaßt:
Aufbringen eines Flußmittels, so daß eine aufgebrachte Menge des Flußmittels auf mindestens eines von dem Aluminiummaterial oder dem Aluminiumlegierungsmaterial und dem Stahlmaterial 0,5 mg/cm³ bis 10 mg/cm³ ist,
wobei das Flußmittel 7 Masse-% bis 15 Masse-% AlF₃ oder 20 Masse-% bis 60 Masse-% CsF enthält und der Rest im Wesentlichen aus KAIF ist,
Bilden eines Verbindungsteils mit dem Aluminiummaterial oder dem Aluminiumlegierungsmaterial und dem Stahlmaterial, und
Schweißen des Aluminiummaterials oder des Aluminiumlegierungsmaterials und des Stahlmaterials, während ein Schweißfüllmaterial, umfassend eine Aluminiumlegierung, bestehend aus mindestens 1,0 Masse-% bis 3,0 Masse-% Si und 0,01 Masse-% bis 0,30 Masse-% Ti und gegebenenfalls 0,01 Masse-% bis 0,3 Masse-% Zr, 0,1 Masse-% oder weniger Mg, 0,1 Masse-% oder weniger Cu, 0,3 Masse-% oder weniger Fe und 0,1 Masse-% oder weniger Mn, wobei der Rest Aluminium und unvermeidbare Verunreinigungen von 0,1 Masse-% oder weniger Cr, 0,1 Masse-% oder weniger Zn, 40 ppm oder weniger B und 0,05 Masse-% oder weniger von anderen Elementen sind, wobei die Gesamtheit der Verunreinigungen 0,15 Masse-% nicht übersteigt, zu dem Verbindungsteil beschickt wird.

3. Verfahren zur Herstellung einer geschweißten Struktur von unterschiedlicher Art von Materialien, aufgebaut aus einem Aluminiummaterial oder einem Aluminiumlegierungsmaterial und einem Stahlmaterial, wobei das Verfahren die Schritte umfaßt:
Bilden eines Verbindungsteils mit dem Aluminiummaterial oder dem Aluminiumlegierungsmaterial und dem Stahlmaterial, und
Schweißen des Aluminiummaterials oder des Aluminiumlegierungsmaterials und des Stahlmaterials, während ein Schweißfüllmaterial, umfassend: ein Hüllmaterial, umfassend eine Aluminiumlegierung, bestehend aus mindestens 1,0 Masse-% bis 3,0 Masse-% Si und 0,01 Masse-% bis 0,30 Masse-% Ti und gegebenenfalls
0,01% Masse-% bis 0,3 Masse-% Zr, 0,1 Masse-% oder weniger Mg, 0,1 Masse-% oder weniger Cu, 0,3 Masse-% oder weniger Fe, und 0,1 Masse-% oder weniger Mn, wobei der Rest Aluminium und unvermeidbare Verunreinigungen von 0,1 Masse-% oder weniger Cr, 0,1 Masse-% oder weniger Zn, 40 ppm oder weniger B und 0,05 Masse-% oder weniger von anderen Elementen sind, wobei die Gesamtheit an Verunreinigungen 0,15 Masse-% nicht übersteigt, und
ein Flußmittel, gefüllt in das Hüllmaterial,
wobei das Flußmittel 7 Masse-% bis 15 Masse-% AlF₃ oder 20 Masse-% bis 60 Masse-% CsF enthält und der Rest im Wesentlichen aus KAIF ist, und
wobei eine Füllrate des Flußmittels 2,0 Masse-% bis 20 Masse-% relativ zu einer Masse eines gesamten Drahtes ist,
zu dem Verbindungsteil beschickt wird.

## Revendications

1. Matériau d'apport pour soudage pour assembler des matériaux de différent type utilisés au moment d'assembler un matériau d'aluminium ou un matériau d'alliage d'aluminium et un matériau d'acier ; le matériau d'apport pour soudage comprenant :
un matériau de gaine comprenant un alliage d'aluminium constitué d'au moins 1,0 % en masse à 3,0 % en masse de Si et 0,01 % en masse à 0,30 % en masse de Ti et, en option, 0,01 % en masse à 0,3 % en masse de Zr, 0,1 % en masse ou moins de Mg, 0,1 % en masse ou moins de Cu, 0,3 % en masse ou moins de Fe et 0,1 % en masse ou moins de Mn,
avec le reste qui est de l'aluminium et des impuretés inévitables de 0,1 % en masse ou moins de Cr, 0,1 % en masse ou moins de Zn, 40 ppm ou moins de B et 0,05 % en masse ou moins d'autres éléments, avec le total d'impuretés ne dépassant pas 0,15 % en masse ;
et un flux versé dans le matériau de gaine,
dans lequel le flux contient 7 % en masse à 15 % en masse de AlF₃ ou 20 % en masse à 60 % en masse de CsF et le reste est essentiellement constitué de KAlF, et dans lequel un taux de remplissage du flux est de 2,0 % en masse à 20,0 % en masse par rapport à une masse d'un fil entier.

2. Procédé de production d'une structure soudée en matériau de différent type constituée d'un matériau d'aluminium ou d'un matériau d'alliage d'aluminium et d'un matériau d'acier ; le procédé comprenant les étapes consistant à :
appliquer un flux de sorte qu'une quantité appliquée du flux à au moins un du matériau d'aluminium ou du matériau d'alliage d'aluminium et du matériau d'acier est de 0,5 mg/cm³ à 10 mg/cm³,
dans lequel le flux contient 7 % en masse à 15 % en masse de AlF₃ ou 20 % en masse à 60 % en masse de CsF et le reste est essentiellement constitué de KAlF ;
former une partie commune avec le matériau d'aluminium ou le matériau d'alliage d'aluminium et le matériau d'acier ; et
souder le matériau d'aluminium ou le matériau d'alliage d'aluminium et le matériau d'acier tandis qu'un matériau d'apport pour soudage comprenant un alliage d'aluminium constitué d'au moins 1,0 % en masse à 3,0 % en masse de Si et 0,01 % en masse à 0,30 % en masse de Ti et, en option,
0,01 % en masse à 0,3 % en masse de Zr, 0,1 % en masse ou moins de Mg, 0,1 % en masse ou moins de Cu, 0,3 % en masse ou moins de Fe et 0,1 % en masse ou moins de Mn, avec le reste qui est de l'aluminium et des impuretés inévitables de 0,1 % en masse ou moins de Cr, 0,1 % en masse ou moins de Zn, 40 ppm ou moins de B et 0,05 % en masse ou moins d'autres éléments, avec le total d'impuretés ne dépassant pas 0,15 % en masse, est alimenté à la partie commune.

3. Procédé de production d'une structure soudée en matériau de différent type constituée d'un matériau d'aluminium ou d'un matériau d'alliage d'aluminium et d'un matériau d'acier ; le procédé comprenant les étapes consistant à :
former une partie commune avec le matériau d'aluminium ou le matériau d'alliage d'aluminium et le matériau d'acier ; et
souder le matériau d'aluminium ou le matériau d'alliage d'aluminium et le matériau d'acier tandis qu'un matériau d'apport pour soudage comprenant : un matériau de gaine comprenant un alliage d'aluminium constitué d'au moins 1,0 % en masse à 3,0 % en masse de Si et 0,01 % en masse à 0,30 % en masse de Ti et, en option,
0,01 % en masse à 0,3 % en masse de Zr, 0,1 % en masse ou moins de Mg, 0,1 % en masse ou moins de Cu, 0,3 % en masse ou moins de Fe et 0,1 % en masse ou moins de Mn, avec le reste qui est de l'aluminium et des impuretés inévitables de 0,1 % en masse ou moins de Cr, 0,1 % en masse ou moins de Zn, 40 ppm ou moins de B et 0,05 % en masse ou moins d'autres éléments, avec le total d'impuretés ne dépassant pas 0,15 % en masse ;
et un flux versé dans le matériau de gaine,
dans lequel le flux contient 7 % en masse à 15 % en masse de AlF₃ ou 20 % en masse à 60 % en masse de CsF et le reste est essentiellement constitué de KAlF ; et
dans lequel un taux de remplissage du flux est de 2,0 % en masse à 20,0 % en masse par rapport à une masse d'un fil entier, est alimenté à la partie commune.
